# EUROPEAN PATENT APPLICATION

(11) **EP 4 730 247 A1**
(43) Date of publication of application: **22.04.2026**
(21) Application number: 24207456.5
(22) Date of filing: 18.10.2024
(51) Int. Cl.: G06Q 20/40, G07F 7/06

(54) **A UNIT AND METHOD FOR DETERMINING ABNORMAL ACCURENCES IN A BATCH OF RECEIVED OBJECTS**

(71) Applicant: Anker Andersen A/S, 7160 Tørring (DK)
(72) Inventor: Heine Eden, Kasper, 7160 Tørring (DK); Gamtofte, Michael, 7160 Tørring (DK); Laursen, Henning, 7160 Tørring (DK)
(74) Representative: Patrade A/S

(57) **Abstract**

The present invention relates to a method (100) of determining abnormal occurrences in a batch (2) of received objects (3), such as used beverage containers.

For each batch, the method (100) comprises acts of receiving (200) objects (3) with at least one object ID (4), reading (300) the object IDs (4) of the received objects (3), counting (400) the received objects (3), and providing (500) a statistical mathematical model (31) of expected distribution of the object IDs based on the read object IDs (4).

The present invention further relates to a recording and/or sorting unit (1) and a system of such units, each comprising a controller (10) with a processor (20) and a computer readable medium (30) storing the statistical mathematical model (31), and instructions (32) to identify (600) deviations in the read object IDs (4). The controller (10) is configured for flagging (700) the batch (2), or objects (3) within the batch (2), if an abnormal occurrence is determined.

## Description

### Field of the Invention

The present invention relates to a method of determining abnormal occurrences in a batch of received objects, such as used beverage containers.

For each batch, the method comprises acts of receiving objects with at least one object ID, reading the object IDs of the received objects, counting the received objects, and providing a statistical mathematical model of expected distribution of the object IDs based on the read object IDs.

The present invention further relates to a recording and/or sorting unit and a system of such units for performing the method.

### Background of the Invention

Many countries have deposit systems for empty beverage containers where a sum of money is paid when the empty container is returned in a reverse vending machine of a similar system. As you often pay the deposit in addition to the price of the beverage, many seek to take advantage of such deposit systems by attempting to return items purchased cheaper without having paid a deposit or having paid a smaller deposit.

To bypass existing security features, existing labels may be removed from the container and a fraudulent label attached instead. As the counterfeiter's attempts to bypass security features become more evolved, so does the need to identify potentially fraudulent containers.

Existing solutions to this problem often involve unique IDs on each container which is then checked by comparing the ID to IDs in a remote database. This results in the deposit being paid to the user of the machine and the ID being deleted from the database, or the deposit being refused if an identical ID is not found in the database.

These systems are very dependent on access to the remote database, which often results in slow systems, or in the worst case, non-functioning systems.

### Object of the Invention

One objective of the present disclosure is to achieve a method overcoming the drawbacks of the prior art to achieve a unit and a method for determining abnormal occurrences in a batch of received objects such as beverage containers.

### Description of the Invention

One objective of the invention is achieved by a method of determining abnormal occurrences in a batch of received objects, such as used beverage containers, from a user to a recording and/or sorting unit.

For each batch, the method comprises acts of:
- receiving objects with at least one object ID;
- reading the object IDs of the received objects;
- counting the received objects;
- providing a statistical mathematical model of expected distribution of the object IDs based on the read object IDs.

The recording and/or sorting unit comprises a controller with a processor and a computer readable medium. The computer readable medium is configured for storing the statistical mathematical model and instructions to identify deviations in the read object IDs based on the statistical mathematical model for determining abnormal occurrences within the batch.

The controller flags the batch, or object within the batch, if an abnormal occurrence is determined.

The object IDs may be in any optical readable form, e.g. a barcode, QR-code, a text string, an image and/or any information or attributes derived from said image, time stamp, labels, logos, or any comparable form of ID or combinations hereof.

The statistical mathematical model may know the format of acceptable object IDs, such as, but not limited to, the number of digits, the accessible information which may be extracted from each ID, elements of the IDs, e.g. time stamp, manufacturer code, brand code etc. An acceptable object ID in one country may be different from an acceptable object ID in another country. Thus, a beverage container bought in one country, may be accepted if returned in the same country by not be accepted if returned in a different country.

One advantage may be achieved by the statistical mathematical model being based on the read object IDs, as the statistical mathematical model thus depends on patterns and deviations within a specific batch. A further advantage may be achieving an adaptive statistical mathematical model.

If a batch comprises a large number of objects with consecutive object IDs and/or several groups of objects with similar object IDs or similar production period, the statistical mathematical model may identify objects having unique IDs or small groups of similar or consecutive object IDs as deviating from the expected distribution of object IDs. Such a batch may indicate a corporation, e.g. restaurant, venue, sports facility etc., who buys products in bulk.

If a batch comprises a lot of random unique IDs, the statistical mathematical model may identify deviations based on e.g. Benford's law, to identify object IDs deviating from the expected distribution of randomized unique IDs. Such a batch may indicate a private person returning objects from a single household.

The statistical mathematical model may be influenced by many small checks to identify a pattern, and consequently identify object IDs deviating from the identified pattern.

The counted number in itself may indicate the type of user, e.g. big or small corporation, or private person, and may be used to evaluate if the amount of deviations within a batch is critical when compared to the counted number of objects within the batch.

The type of container may influence how significant a deviation is deemed to be, e.g. most PET bottles comprise an object ID arranged on the label, which can easily be removed and replaced by a counterfeited label, whereas an object ID arranged on a can is more likely to be imprinted on the can itself, and therefore more difficult to counterfeit.

One advantage may be achieved by the object comprising more than one object ID, as deviations may be deemed more significant on objects comprising more than one object ID. Thus, the determination on whether an abnormal occurrence has occurred is based on reading more than one object IDs on each object in the batch. The objects may comprise more than one object IDs such as:
- information on a label, e.g. barcode or QR code,
- the shape of the container, e.g. shape of PET bottle or can,
- the colour e.g. the colour of the label, logo, bottle, or can,
- weight of the container.

The act of flagging may notify the user of the recording and/or sorting unit that one or more objects within the batch deviate from the expected distribution of object IDs. The notification may comprise the counted number of objects and number of flagged objects. The notification may further comprise the reason for the objects being flagged, e.g. the object ID is unreadable, or the object ID is suspected to be fraudulent.

The batch may comprise object IDs deviating from the expected distribution without the batch or the specific deviating objects are flagged.

The controller may further give instructions to store the data concerning the deviations of expected distribution of the object IDs as evidence. The evidence may be transferred to a back-office application or a central server awaiting manual intervention.

In one embodiment of the method, the recording and/or sorting unit may comprise a buffer configured for receiving the flagged batch or objects. The method may comprise an act of the controller giving instructions to transfer the flagged batch or flagged objects to the buffer.

The buffer may ensure compliance with applicable national legal practices.

The buffer may physically store the flagged objects.

In one jurisdiction, the stored flagged objects may be returned to the user, while the deposit is not paid for the returned objects. An advantage of the flagged objects being returned is achieving an immediate conclusion of whether or not the received objects are subject to a deposit or if they are flagged as potentially being fraudulent. A further advantage is avoiding a back log of batches or object IDs awaiting further investigation and the manhours associated with the further investigation.

In another jurisdiction, the stored flagged objects may be confiscated as physical evidence, while the deposit is withheld until the flagged object IDs have been further investigated. An advantage of confiscating the flagged objects may be preventing the user of attempting to return and claim the deposit from fraudulent objects in another recording and/or sorting unit which do not identify deviations in the expected distribution of object IDs.

In one embodiment, the method may further comprise an act of the controller giving instructions to withhold the deposit on the batch or on the flagged objects, until the determined abnormal occurrence has been further investigated.

In one embodiment of the method, the act of providing a statistical mathematical model may be based on received information of at least a user ID or a user group.

The user ID may indicate a user group, e.g. a big or small corporation or a private person.

One advantage of the statistical mathematical model being based on the user ID may be enabling the tracking of deviations across multiple different batches received from the same user ID.

One advantage of the statistical mathematical model being based on at least a user ID or user group may be preventing the statistical mathematical model from guessing the type of user and instead using the actual user ID, thereby removing a potential source of error in the expected distribution of object IDs.

In one embodiment of the method, the object ID may comprise sequential numbers and/or randomized numbers.

The object ID may be a unique ID, e.g. the unique ID may comprise completely randomized numbers, sequential numbers and/or time stamps, or a combination of random numbers and sequential numbers and time stamps.

The object ID may be unique for each product type, e.g. identical products may have identical object IDs, the object IDs for the product type may be different if produced at a different location and/or have a different container, e.g. a drink being canned or bottled, or different sizes of containers. The IDs of the identical products may be differentiated by a time stamp.

An advantage of the object IDs comprising sequential numbers and/or randomized numbers may be ensuring that the statistical mathematical model is able to handle any type of object ID and any combination thereof.

In one embodiment of the method the object ID may comprise one or more codes.

An advantage of the one or more codes may be achieving a unique ID and/or more data points for a more precise statistical mathematical model of expected distribution of object IDs.

A further advantage may be achieved by the object ID comprising more than one ID of sequential and/or randomized nature, and as object IDs are subject to change over time, the object ID may be able to handle any type of object ID and any combination thereof.

The object ID may comprise a variety of data attributes optionally in combination with type of object.

The object IDs may be in any optical readable form, e.g. a barcode, QR-code, a text string, an image, time stamp, labels, logos, or any comparable form of ID or combinations hereof.

An object may be flagged because of deviations with the attributes of the object ID.

An object may be flagged because of deviations within a label, e.g. the placement, the color, the logo, etc. The object may also be flagged if a label is arranged on a type of container or a container having a shape that does not correspond to any object produced by an authorized manufacturer of that object.

In one embodiment of the method the statistical mathematical model may comprise determining if the determined abnormal occurrences are within a threshold for statistical probability.

The threshold may be dependent on the amount of accessible data attributes which can be extracted from the object ID(s). The more accessible data attributes, the more precise is the statistical mathematical model of expected distribution of object IDs, and thus, the more precise is the identification of deviating objects within a batch.

The threshold may change depending on what the result of a batch or object being flagged is.

In one embodiment of the method, the statistical mathematical model may be a trained data driven model.

One advantage achieved by the statistical mathematical model being a trained data driven model may be determining the expected distribution of object IDs based on both the read object ID and historic data collected from each batch received by the recording and sorting unit.

A further advantage may be achieved by continuously adapting and improving the data driven model and establish new relationships between the read object IDs, the number of received objects, and optionally the user ID or user group. Thus, using the trained data driven model gives an accurate expected distribution of object IDs to accurately identify deviating object IDs and accurately determine an abnormal occurrence within the batch and flag potential fraudulent objects. As the data driven model is trained, and as the information in the object IDs and the object IDs themselves evolve, and as counterfeiting evolve, so does the threshold for what is considered an abnormal occurrence and need to be flagged.

In one embodiment of the method the controller may be configured for collecting data from the recording and/or sorting unit and for communicating said collected data to an external server for training the data driven model.

One advantage achieved by communicating the collected data to an external server may be ensuring that the data driven model is trained with as much data as possible to achieve the most precise determination of abnormal occurrences as possible. One advantage achieved by determining abnormal occurrences for each batch at the recording and/or sorting unit, may be ensuring that each unit can determine an abnormal occurrence without having access to a register, a remote server, or the internet in general.

In one embodiment of the method, the controller may be configured for communicating with a system of recording and/or sorting units.

One advantage of the controller communicating with a system of recording and/or sorting units may be receiving data to improve the statistical mathematical model. One further advantage may be refusing objects from a user that previously has attempted to claim a deposit on fraudulent objects, or lowering the threshold for what is determined to be an abnormal occurrence.

A further objective of the invention is achieved by a recording and/or sorting unit comprising a controller with a processor and a computer readable medium storing a statistical mathematical model, and instructions to compare read object IDs to the statistical mathematical model for determining abnormal occurrences within the batch. If an abnormal occurrence is determined, the controller is configured for flagging the batch, or object IDs within the batch. The recording and/or sorting unit is configured for performing one or more acts of the method according to the invention.

The advantages achieved by the recording and/or sorting unit are substantially similar to the advantages achieved by the above-described embodiments of the method of determining abnormal occurrences in a batch of received objects.

In one embodiment, the recording and/or sorting unit may a reverse vending machine (RVM).

A yet further objective of the invention is achieved by a system of recording and/or sorting units according to the invention, configured for performing one or more acts of the method according to the invention.

The advantages achieved by the system of recording and/or sorting units are substantially similar to the advantages achieved by the above-described embodiments of the method of determining abnormal occurrences in a batch of received objects.

### Description of the Drawing

Various examples are described hereinafter with reference to the figures. Like reference numerals refer to like elements throughout. Like elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example need not have all the aspects or advantages shown. An aspect or an advantage described in conjunction with a particular example is not necessarily limited to that example and can be practiced in any other examples even if not so illustrated, or if not so explicitly described.

Exemplary embodiments of the invention are described in the figures, wherein:
- Fig. 1: illustrates an embodiment of the method of determining abnormal occurrences in a batch of received objects.
- Fig. 2: illustrates an embodiment of the receiving and/or sorting unit.
- Fig. 3: illustrates a system of receiving and/or sorting units.

### Detailed Description of the Invention

Various examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects.

Throughout the specification, when an element is referred to as being "connected" to another element, the element is "directly connected" to the other element, "electrically connected", "fluidically connected" or "communicatively connected" to the other element with one or more intervening elements interposed there between.

The terminology used herein is for the purpose of describing particular examples only and is not intended to be limiting. As used herein, the terms "comprises" "comprising" "includes" and/or "including" when used in this specification specify the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

| No | Item |
|---|---|
| 1 | Receiving and/or sorting unit |
| 2 | Batch |
| 3 | Object |
| 4 | Object ID |
| 5 | System of receiving and/or sorting units |
| 100 | Method of determining abnormal occurrences |
| 200 | Receiving objects with an object ID |
| 300 | Reading the object IDs |
| 400 | Counting the received objects |
| 500 | Providing a statistical mathematical model |
| 600 | Identifying deviations |
| 700 | Flagging the batch or object IDs if an abnormal occurrence is determined |

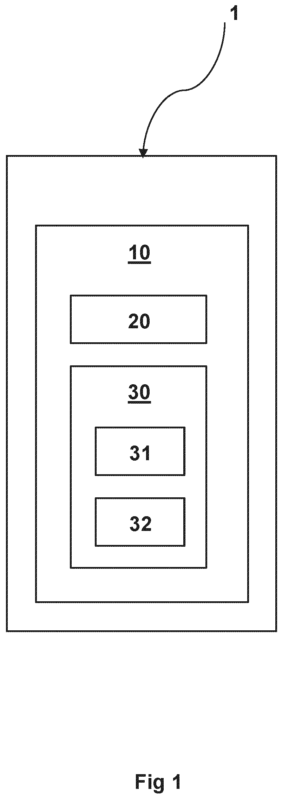

Figure 1 illustrates an embodiment of the recording and/or sorting unit 1 configured for receiving a batch 2 of received objects 3, wherein each object 2 comprises at least one object ID 4.

The recording and/or sorting unit 1 comprises a controller 10 with a processor 20 and a computer readable medium 30.

The computer readable medium 30 is configured for storing a statistical mathematical model 31 and instructions 32 to compare the read object IDs 4 to the statistical mathematical model 31 for determining abnormal occurrences within the batch 2.

The controller is configured for flagging the batch 2 or objects 3 within the batch 2 if an abnormal occurrence is determined

In one embodiment (not illustrated), the recording and/or sorting unit 1 is a reverse vending machine (RVM).

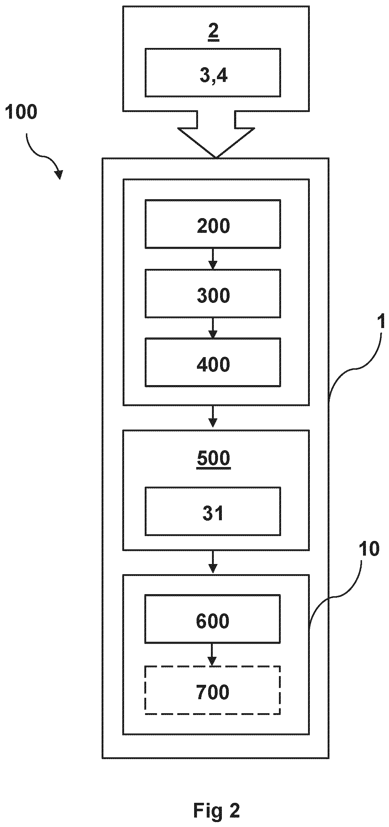

Figure 2 illustrates one embodiment of the method 100 of determining abnormal occurrences in a batch 2 of received objects 3, such as used beverage containers, from a user to a recording and/or sorting unit 1.

The recording and/or sorting unit 1 is configured for performing one or more acts of the method 100.

For each batch, the method 100 comprises an act of receiving 200 objects 3 with at least one object ID 4.

For each batch, the method 100 comprises an act of reading 300 the object IDs 4 of the received objects 3.

For each batch, the method 100 comprises an act of counting 400 the received objects 3.

For each batch, the method 100 comprises an act of providing 500 a statistical mathematical model 31 of expected distribution of the object IDs based on the read object IDs 4.

The recording and/or sorting unit 1 comprises a controller 10 with a processor 20 and a computer readable medium 30.

The computer readable medium is configured for storing the statistical mathematical model 31 and instructions 32 to identify 600 deviations in the read object IDs 4 based on the statistical mathematical model 31 for determining abnormal occurrences within the batch 2.

The controller 10 is configured for flagging 700 the batch 2, or objects 3 within the batch 2, if an abnormal occurrence is determined.

Although not present in the figures, the recording and/or sorting unit 1 may further comprise a buffer configured for receiving the flagged batch 2 or objects 3 within the batch. The method 100 may further comprise an act of the controller 10 giving instructions to transfer the flagged batch or flagged objects to the buffer.

Although not present in the figures, the method 100 may further comprise an act of the controller 10 giving instructions to withhold the deposit on the batch or flagged objects 3 until the determined abnormal occurrence has been further investigated.

The act of providing a statistical mathematical model 31 may be based on received information of at least a user ID or a user group.

The object ID 4 may comprise sequential numbers and/or randomized numbers, and/or may comprise at least one code.

The statistical mathematical model 31 may comprise determining if the determined abnormal occurrences are within a threshold for statistical probability.

The statistical mathematical model 31 may be a trained data driven model.

The controller 10 may be configured for collecting data from the recording and/or sorting unit 1, and for communicating the collected data to an external server for training the data driven model.

The controller 10 may be configured for communicating with a system 5 of recording and/or sorting units 1.

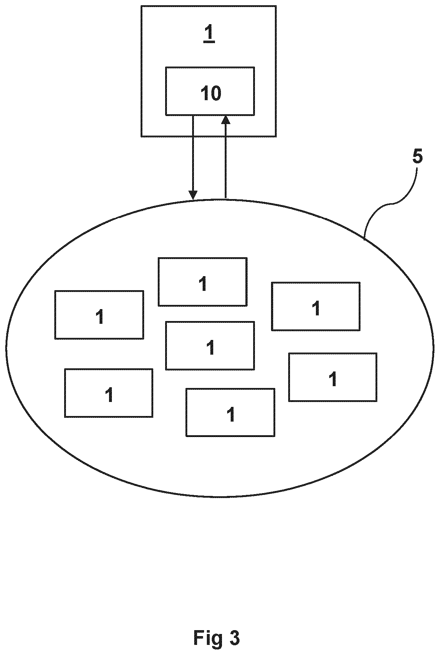

The system 5 of recording and/or sorting units 1, configured for performing one or more acts of the method 100 is illustrated in figure 3.

## Claims

1. Method (100) of determining abnormal occurrences in a batch (2) of received objects (3), such as used beverage containers, from a user to a recording and/or sorting unit (1), for each batch said method (100) comprises acts of:
- receiving (200) objects (3) with at least one object ID (4);
- reading (300) the object IDs (4) of the received objects (3);
- counting (400) the received objects (3);
- providing (500) a statistical mathematical model (31) of expected distribution of the object IDs based on the read object IDs (4);
wherein the recording and/or sorting unit (1) comprises a controller (10) with a processor (20) and a computer readable medium (30) storing the statistical mathematical model (31), and instructions (32) to identify (600) deviations in the read object IDs (4) based on the statistical mathematical model (31) for determining abnormal occurrences within the batch (2),
wherein the controller (10) is configured for flagging (700) the batch (2), or objects (3) within the batch (2), if an abnormal occurrence is determined.

2. The method (100) according to claim 1, wherein the recording and/or sorting unit (1) comprises a buffer configured for receiving the flagged batch (2) or objects (3), wherein the method (100) comprises an act of the controller (10) giving instructions to transfer the flagged batch or flagged objects to the buffer.

3. The method (100) according to claim 1 or 2, further comprises an act of the controller (10) giving instructions to withhold the deposit on the batch or flagged objects (3) until the determined abnormal occurrence has been further investigated.

4. The method (100) according to any of the previous claims, wherein the act of providing a statistical mathematical model (31) is based on received information of at least a user ID or a user group.

5. The method (100) according to any of the preceding claims, wherein the object ID (4) comprises sequential numbers and/or randomized numbers.

6. The method (100) according to any of the preceding claims, wherein the object ID (4) comprises at least one code.

7. The method (100) according to any of the preceding claims, wherein the statistical mathematical model (31) comprises determining if the determined abnormal occurrences is within a threshold for statistical probability.

8. The method (100) according to any of the preceding claims, wherein the statistical mathematical model (31) is a trained data driven model.

9. The method (100) according to any of the preceding claims, wherein the controller (10) is configured for collecting data from the recording and/or sorting unit (1), and for communicating said collected data to an external server for training the data driven model.

10. The method (100) according to any of the preceding claims, wherein the controller (10) is configured for communicating with a system (5) of recording and/or sorting units (1).

11. A recording and/or sorting unit (1) comprising a controller (10) with a processor (20) and a computer readable medium (30) storing a statistical mathematical model (31), and instructions (32) to compare read object IDs (4) to the statistical mathematical model (31) for determining abnormal occurrences within the batch (2), wherein the controller (10), if an abnormal occurrence is determined, is configured for flagging (700) the batch (2), or object IDs (4) within the batch (2), and wherein the recording and/or sorting unit is configured for performing one or more acts of the method according to any of claims 1-10.

12. The recording and/or sorting unit (1) is a reverse vending machine (RVM).

13. A system (5) of recording and/or sorting units (1) according to claim 11-12, configured for performing one or more acts of the method (100) according to any of claims 1-10.
